# EUROPÄISCHE PATENTSCHRIFT

(11) **EP 0 849 568 B1**
(45) Veröffentlichungstag und Bekanntmachung des Hinweises auf die Patenterteilung: **02.06.1999**
(21) Anmeldenummer: 97810559.1
(22) Anmeldetag: 08.08.1997
(51) Int. Cl.: G01F 1/84, G01N 9/00

(54) **Coriolis-Massendurchfluss-/-Dichte-Aufnehmer mit einem einzigen geraden Messrohr**
Coriolis massflow/density sensor with a single straight measuring tube
Capteur de débit massique et/ou de densité avec un seul droit tube de mesure

(30) Priorität: 11.12.1996 EP 96119849; 16.01.1997 EP 97100582
(43) Veröffentlichungstag der Anmeldung: 24.06.1998
(73) Patentinhaber: Endress + Hauser Flowtec AG, CH-4153 Reinach BL 1 (CH)
(72) Erfinder: Drahm, Wolfgang, Dr., 4222 Zwingen (CH); Szaloky, Georg, Dr., 4059 Basel (CH); Wenger, Alfred, Dr., 8413 Neftenbach (CH); Bitto, Ennio, 4147 ÄSCH (CH); Koudal, Ole, 4153 Reinach (CH); Matt, Christian, Dipl.Ing. (FH), 79539 Lörrach (DE); Schütze, Christian, 4054 Basel (CH)
(74) Vertreter: Morstadt, Volker, Dipl.-Ing.

(56) Entgegenhaltungen:
- EP-A- 0 469 448
- EP-A- 0 524 523
- EP-A- 0 547 455
- WO-A-88/03642
- WO-A-95/03528
- US-A- 4 524 610

## Beschreibung

Die Erfindung betrifft Coriolis-Massedurchfluß/Dichte-Aufnehmer mit einem einzigen geraden Meßrohr.

In der EP-A 469 448 ist Coriolis-Massedurchfluß/Dichte-Aufnehmer, der in eine Rohrleitung einfügbar ist und im Betrieb von einem zu messenden Fluid durchströmt wird,
- mit einem einzigen geraden, ein Einlaßende und ein Auslaßende aufweisenden Meßrohr,
- mit einem am Einlaßende und am Auslaßende fixierten, torsions- und biegestiefen Tragsystem,
- mit einem Pendelarm,
   -- der in der Mitte zwischen dem Einlaß- und dem Auslaßende am Meßrohr fixiert ist,
- mit einer im Endbereich des Pendelarms angebrachten Eigenfrequenzeinstellmasse,
- mit einer auf den Pendelarm einwirkenden und somit das Meßrohr in Schwingungen versetzenden Erregeranordnung, und
- mit jeweils einem Sensor für die einlaß- bzw. die auslaßseitigen Bewegungen des Meßrohrs, der jeweils im gleichen Abstand zwischen dessen Mitte und dem Einlaß- bzw. dem Auslaßende angeordnet ist.

Aufgrund des Pendelarms werden nicht nur Biegeschwingungen, sondern auch Torsionsschwingungen des einzigen Meßrohrs erregt, so daß nicht nur nicht der Massedurchfluß und/oder die Dichte des Meßfluids, sondern auch dessen Viskosität meßbar ist. Das von Meßrohr und Pendelarm gebildete Schwingungssystem wird auf seiner Grundresonanzfrequenz erregt.

In der US-A 55 31 126, die der WO-A 95/03528 entspricht, ist ferner ein Coriolis-Massedurchfluß/Dichte-Aufnehmer beschrieben, der in eine Rohrleitung mittels eines einlaß- und eines auslaßseitigen Anschlußelements einfügbar ist und im Betrieb von einem zu messenden Fluid durchströmt wird,
- mit einem einzigen geraden, eine Längsachse aufweisenden, zwischen den Anschlußelementen verlaufenden und daran fixierten Meßrohr,
- mit einem zum Meßrohr parallelen, geraden, nicht-durchflossenen Blindrohr,
- mit einer einlaßseitigen und einer auslaßseitigen Knotenplatte,
   -- deren eine den einlaßseitigen Endteil des Meßrohrs am entsprechenden Endteil des Blindrohrs und
   -- deren andere den auslaßseitigen Endteil des Meßrohrs am entsprechenden Endteil des Blindrohrs jeweils nebeneinander fixiert,
- mit einem als Träger dienenden Trägerrohr, dessen jeweiliges Ende am jeweiligen Anschlußelement fixiert ist und von dem eine Längs-Symmetrieachse parallel zur Längsachse des Meßrohrs verläuft,
- mit Mitteln, die nur am Blindrohr zur Erregung von Biegeschwingungen des Meßrohrs angreifen, deren Frequenz jedoch nicht mit der Resonanzfrequenz des Meßrohrs identisch ist, wobei Meßrohr und Blindrohr gegenphasig zueinander schwingen.

Dieser vorbeschriebene Coriolis-Massedurchfluß/Dichte-Aufnehmer ist bei gegebener Dimensionierung nur in einem schmalen Bereich von Dichtewerten - etwa ± 5% einer Nenn-Dichte - mechanisch ausbalanciert, d.h. nur bei diesen Dichtewerten werden von den Schwingungen des Meßrohrs herrührende Kräfte über die Anschlußelemente praktisch nicht auf die Rohrleitung übertragen. Der erwähnte Bereich wird durch die Erregung "neben" der Resonanzfrequenz zwar erweitert, es ist jedoch eine erheblich größere Erregungsenergie erforderlich als bei Resonanz-Erregung. Je weniger ausbalanciert der Massedurchfluß/Dichte-Aufnehmer ist, um so mehr werden Kräfte und Schwingungsenergie auf die Rohrleitung übertragen; somit geht aber Schwingungsenergie verloren und die Meßungenauigkeit wird größer.

Diese Unbalance macht sich nicht nur bei der temperaturbedingten Dichteänderung ein und desselben Fluids störend bemerkbar, sondern auch ganz besonders bei der Messung von unterschiedlichen Fluiden, die in der Rohrleitung zu unterschiedlichen Zeiten, z.B. nacheinander, fließen.

Da Coriolis-Massedurchfluß/Dichtemesser für die Messung einer möglichst umfangreichen Palette von untereinander sehr verschiedenen Fluiden mit den unterschiedlichsten Dichten geeignet sein sollen, ist es somit wichtig, Coriolis-Massedurchfluß/Dichte-Aufnehmer zu schaffen, die über einen weiten Dichtebereich im erwähnten Sinne ausbalanciert sind und somit genau messen.

Hierzu besteht eine erste Variante bzw. zweite Variante der Erfindung in dem in Anspruch 1 bzw. Anspruch 10 definierten Coriolis-Massedurchfluß/Dichte-Aufnehmer.

Vorteilhafte Ausgestaltungen oder Weiterbildungen der beiden Varianten der Erfindung sind in den abhängigen Ansprüchen 2 bis 9 und 11 bis 16 definiert.

Ein Vorteil der Erfindung besteht u.a. darin, daß die Meßgenauigkeit der Massedurchflußmessung über einen weiten Dichtebereich (0 kg/m³ bis 3.000 kg/m³) hervorragend gut ist - 0 kg/m³ entspricht dabei einer Messung des Nullpunkts der Massedurchflußmessung mit einem Vakuum im Meßrohr. An Massedurchfluß/Dichte-Aufnehmern einer Pilotserie wurden z.B. Genauigkeiten im Bereich von 0,1% vom Meßwert ermittelt.

Ferner ist ein weiterer wichtiger Vorteil der Erfindung, daß auch die Viskosität des Fluids gut meßbar ist, was auf den folgenden, dem Durchschnittsfachmann geläufigen Sachverhalten beruht:

Die Viskosität eines Fluids ist mit einem Coriolis-Massedurchfluß/Dichte-Aufnehmer nur meßbar, wenn dessen Meßrohr bzw. dessen Meßrohre (auch) eine Drehschwingung ausführt bzw. ausführen, so daß auf das Fluid Scherkräfte ausgeübt werden. Bei zu Biegeschwingungen erregten geraden Meßrohren treten überhaupt keine Drehschwingungen und somit keine Scherkräfte auf.

Bei ausleger-artig gebogenen, insb. U-förmigen, Meßrohren treten zwar Drehschwingungen auf, deren Amplitude ist jedoch so gering, daß eine Messung der Viskosität kaum möglich ist. Patentdokumente, in denen die Viskosität in Zusammenhang mit Coriolis-Massedurchfluß/Dichte-Aufnehmern überhaupt erwähnt ist, sind nicht sehr zahlreich.

So erwähnt z.B. die US-A 49 38 075 lediglich die Navier-Stokes-Gleichung, in der u.a. die Scherviskosität vorkommt, die jedoch nicht gemessen wird. Andere Patentschriften handeln lediglich von der Viskositätskompensation der gemessenen Werte des Massedurchflusses, vgl. z.B. die US-A 50 27 662, die US-A 48 76 879 und die US-A 48 72 351.

Einrohr-Coriolis-Massedurchfluß/Dichte-Aufnehmer entsprechend der Erfindung führen nun nicht nur die für die Massedurchfluß- und Dichtemessung erforderliche und beabsichtigte Biegeschwingung, sondern auch wegen der Auslegermasse im zweiten Biegeschwingungs-Grundmode eine Drehschwingung um eine Drehschwingungsachse aus, deren Lage unten näher erläutert ist.

Die Amplitude dieser Drehschwingung ist bei der Erfindung nun so ausreichend groß, daß zusätzlich zum Massedurchfluß und der Dichte auch noch die Viskosität des Fluids gemessen werden kann, und zwar mit lediglich geringfügigem Aufwand an zusätzlicher Elektronik.

Für diese Viskositätsmessung kann auf in der Literatur längst beschriebene Verfahren zurückgegriffen werden, die diese Messung in Verbindung mit der Dichtemessung von Fluiden mittels schwingender mechanischer Anordnungen, insb. Rohren, diskutieren.

So kann z.B. nach der Zeitschrift "IEEE Transactions on Industrial Electronics and Control Instrumentation", August 1980, Seiten 247 bis 253 die Viskosität bestimmt werden, wenn der Resonanz-Gütefaktor der schwingenden mechanischen Anordnung incl. des Fluids gemessen wird. Dies kann z.B. durch die Messung des elektrischen Stromes erfolgen, mit dem diese erregt wird.

Die Erfindung wird nun anhand von in den Figuren der Zeichnung dargestellten Ausführungsbeispielen näher erläutert. In den Figuren sind gleiche Teile mit denselben Bezugszeichen versehen.
- Fig. 1 zeigt: eine teilweise geschnittene Längsansicht einer ersten Ausgestaltung eines Coriolis-Massedurchfluß/Dichte-Aufnehmers nach der ersten Variante der Erfindung,
- Fig. 2 zeigt: eine entlang der Linie A-A von Fig. 1 geschnittene Ansicht,
- Fig. 3 zeigt: eine entlang der Linie B-B von Fig. 1 geschnittene Ansicht,
- Fig. 4 zeigt: eine entlang der Linie C-C von Fig. 2 geschnittene Ansicht,
- Fig. 5 zeigt: eine mit Fig. 3 vergleichbare Schnittansicht einer Abwandlung des Coriolis-Massedurchfluß/Dichte-Aufnehmers der Fig. 1 bis 4,
- Fig. 6 zeigt: eine der Fig. 1 entsprechende Schnittansicht einer ersten Realisierung einer zweiten Ausgestaltung der ersten Variante,
- Fig. 7 zeigt: eine der Fig. 1 entsprechende Schnittansicht einer zweiten Realisierung der zweiten Ausgestaltung der ersten Variante,
- Fig. 8 zeigt: eine der Fig. 1 entsprechende Schnittansicht einer dritten Realisierung der zweiten Ausgestaltung der ersten Variante,
- Fig. 9 zeigt: eine der Fig. 1 entsprechende Schnittansicht einer vierten Realisierung der zweiten Ausgestaltung der ersten Variante,
- Fig. 10 zeigt: eine der Fig. 1 entsprechende Schnittansicht einer fünften Realisierung der zweiten Ausgestaltung der ersten Variante,
- Fig. 11 zeigt: eine der Fig. 1 entsprechende Schnittansicht einer sechsten Realisierung der zweiten Ausgestaltung der ersten Variante,
- Fig. 12 zeigt: schematisch das Schwingungsverhalten von Meßrohr und Auslegermasse im bei der Erfindung verwendbaren ersten Biegeschwingungs-Grundmode,
- Fig. 13 zeigt: schematisch das Schwingungsverhalten von Meßrohr und Auslegermasse im bei der Erfindung immer verwendeten zweiten Biegeschwingungs-Grundmode,
- Fig. 14 zeigt: eine Weiterbildung der ersten Variante der Erfindung in einer mit Fig. 2 vergleichbaren Schnittansicht.
- Fig. 15 zeigt: in perspektivischer Draufsicht einen Coriolis-Massedurchfluß/Dichte-Aufnehmer nach der zweiten Variante der Erfindung,
- Fig. 16 zeigt: in perspektivischer Unteransicht den Coriolis-Massedurchfluß/Dichte-Aufnehmer von Fig. 15, und
- Fig. 17 zeigt: in perspektivischer Draufsicht und in gegenüber Fig. 15 vergrößertem Maßstab ein wichtiges Detail dieser Figur.

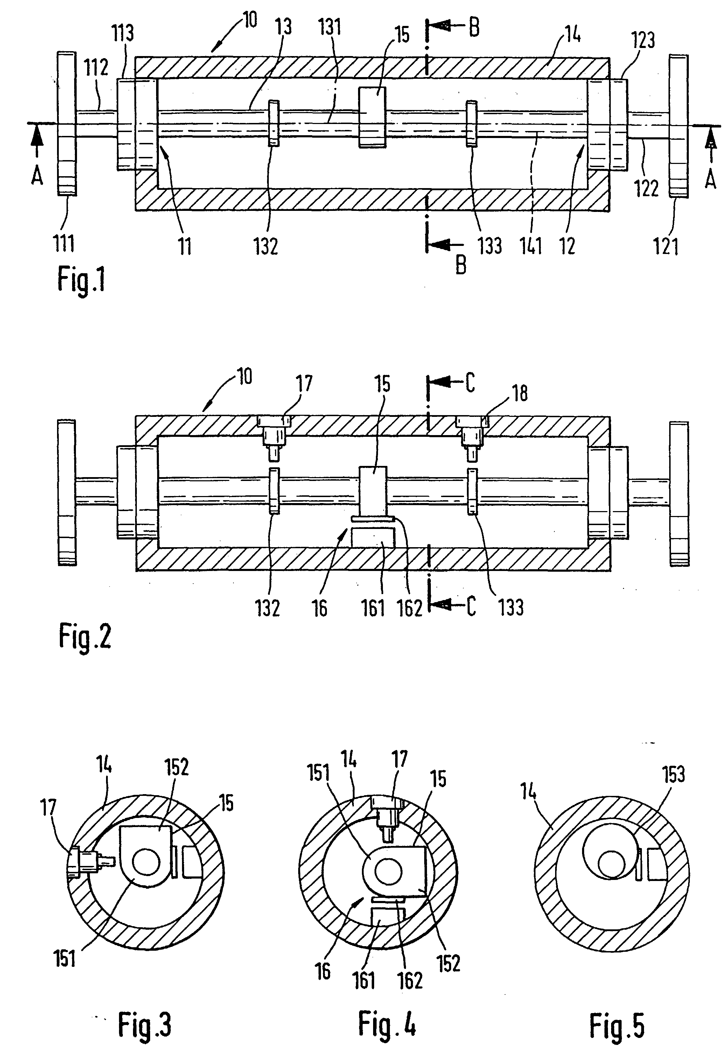

Die teilweise geschnittene Längsansicht der Fig. 1 zeigt einen Coriolis-Massedurchfluß/Dichte-Aufnehmer 10 nach der ersten Variante der Erfindung und die Fig. 2 dessen Querschnitt entlang der Linie A-A von Fig. 1. Bei Benutzung ist der Massedurchfluß/Dichte-Aufnehmer 10 in den Verlauf einer von einem zu messenden Fluid durchströmten, aus Gründen der Übersichtlichkeit jedoch nicht dargestellten Rohrleitung eines gegebenen Durchmessers einfügbar und wird mit ihr vor der Inbetriebnahme fluiddicht verbunden.

In den Fig. 1 und 2 sind zu diesem Zweck entsprechende Flansche 111, 121 dargestellt, die über ein jeweiliges kurzes Rohrstück 112, 122 mit einem jeweiligen Endstück 113, 123 verbunden sind, in das bzw. in dem ein Einlaßende 11 und ein Auslaßende 12 eines einzigen Meßrohrs 13 jeweils mündet und darin fixiert ist; das Meßrohr ist gerade und hat eine Längsachse 131. Der Massedurchfluß/Dichte-Aufnehmer 10 kann anstatt über die Flansche 111, 121 auch über andere übliche Befestigungsmittel in die Rohrleitung eingefügt werden.

Einlaßende 11 und Auslaßende 12 des Meßrohrs 13 sind an einem Träger fixiert, der z.B. in der Form eines offenen oder geschlossenen Rahmens oder eines zylindrischen Rohres 14 ausgebildet sein kann. Der geschlossene Rahmen oder das zylindrische Rohr umgeben das Meßrohr 13 vollständig nach Art einer Umhüllung. Bevorzugt sind das Meßrohr 13 und die Endstücke 113, 123 sowie diese und der Träger miteinander verschweißt.

Der Träger hat eine Längs-Schwerelinie 141, die parallel zur Längsachse 131 des Meßrohrs 13 verläuft, jedoch nicht mit dieser zusammenfällt. Diese Nicht-Deckungsgleichheit ist aus den Fig. 3 und 4 ersichtlich, die jeweils eine Schnittansicht entlang der Linie B-B von Fig. 1 bzw. entlang der Linie C-C von Fig. 2 zeigen.

In den Fig. 1 bis 4 ist jeweils ein kreiszylindrisches Rohr 14 mit vollständig einheitlicher Wandstärke dargestellt. Die Längs-Schwerelinie des Rohres 14 ist daher identisch mit seiner Längsachse, und Meßrohr 13 sowie Rohr 14 sind wegen der erwähnten Parallelität ihrer Achsen nicht konzentrisch bzw. nicht koaxial zueinander angeordnet.

In der Mitte zwischen den Endstücken 113, 123 ist am Meßrohr 13 eine Auslegermasse 15 fixiert, die eine Scheibe mit einer Bohrung sein kann, mittels der die Scheibe über das Meßrohr 13 geschoben und darauf fixiert ist. In den Fig. 3 und 4 ist zu sehen, daß die Scheibe in den darin dargestellten Ausführungsbeispielen einen mit der Bohrung koaxialen Halbkreisring 151 mit einem daran angeformten Rechteckteil 152 aufweist.

In Fig. 5, die einen mit den Fig. 3 und 4 vergleichbaren Querschnitt zeigt, ist dargestellt, daß die Auslegermasse auch eine Kreisscheibe 153 sein kann, die mittels einer außermittig angebrachten Bohrung über das Meßrohr 13 geschoben und darauf fixiert ist. Kreisscheibe 153 und Meßrohr 13 sind somit nicht konzentrisch angeordnet.

Die als Auslegermasse 15 dienenden Scheiben nach den Fig. 2 bis 5 haben bevorzugt eine Dicke, die etwa halb so groß wie der Durchmesser des Meßrohrs 13 ist.

In den Fig. 2 bis 4 ist eine Erregeranordnung 16 zu sehen, die etwa in der Mitte zwischen den Endstücken 113, 123 angeordnet ist. Sie ist z.B. ein elektromagnetischer Erreger, der beispielsweise eine am Träger bzw. am Rohr 14 befestigte Spulenanordnung 161 und einen an der Auslegermasse 15 befestigten Dauermagneten 162 umfaßt.

Als Erregeranordnung können die für diesen Zweck im Stand der Technik von Coriolis-Massedurchfluß/Dichte-Aufnehmern und Coriolis-Massedurchflußmessern beschriebenen verschiedenen Arten von Erregeranordnungen dienen.

Die Erregeranordnung kann auch so ausgebildet sein, was in den Figuren der Einfachheit halber nicht dargestellt ist, daß eine erste Teilanordnung vorgesehen ist, die auf das Meßrohr mit einer ersten Erregerkraft in Richtung auf den Schnittpunkt einer Längs-Symmetrielinie der Auslegermasse mit der Längsachse des Meßrohrs einwirkt, und daß ferner eine zweite Teilanordnung vorgesehen ist, die auf ein meßrohr-abgewandtes Ende der Auslegermasse mit einer der ersten Erregerkraft entgegengerichteten zweiten Erregerkraft einwirkt.

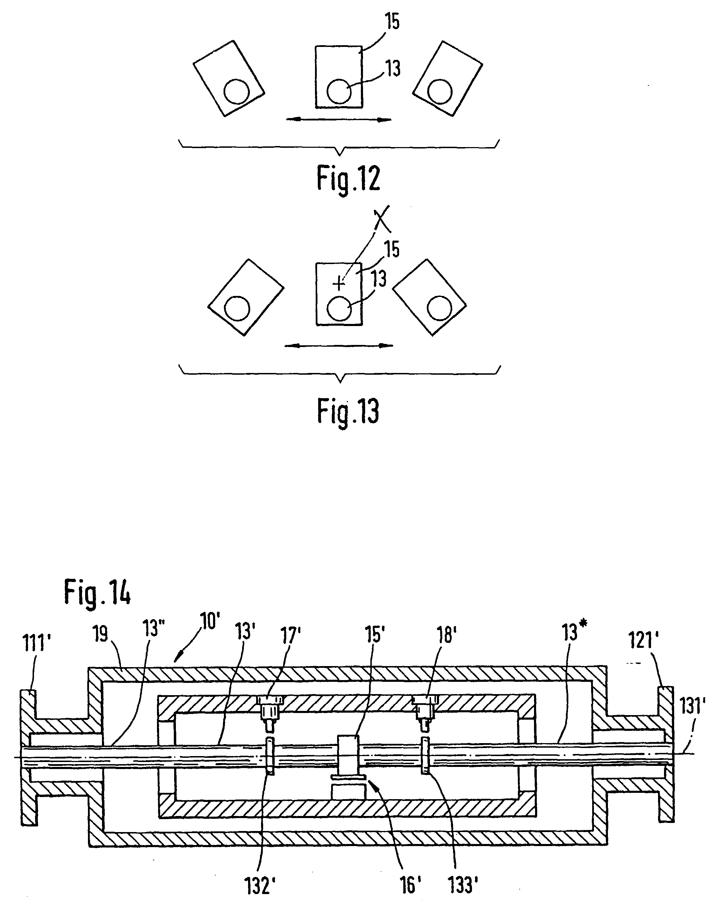

Mittels der Erregeranordnung 16 wird das Meßrohr 13 im Betrieb zu Biegeschwingungen erregt, deren Frequenz gleich der mechanischen Resonanzfrequenz des Meßrohrs ist. Diese ist, wie seit Jahrzehnten auch bei Coriolis-Massedurchfluß-Aufnehmern bekannt ist, ein Maß für die Dichte des zu messenden Fluids, vgl. z.B. die US-A 41 87 721. Weitere Einzelheiten zur Schwingungsanregung werden unten anhand der Erläuterung der Fig. 12 und 13 noch angegeben.

In den Fig. 2 bis 4 ist ferner ein jeweiliger Sensor 17, 18 für die einlaß- bzw. die auslaßseitigen Bewegungen des Meßrohrs 13 schematisch dargestellt, der jeweils im gleichen Abstand zwischen dessen Mitte und dem einlaß- bzw. dem auslaßseitigen Endstück 113 bzw. 123 angeordnet ist. Bevorzugt befindet sich am Ort des jeweiligen Sensors auf dem Meßrohr 13 eine ringförmige Rippe 132, 133.

Als Sensoren 17, 18 können die für diesen Zweck im Stand der Technik von Coriolis-Massedurchfluß/Dichte-Aufnehmern und Coriolis-Massedurchflußmessern beschriebenen verschiedenen Arten von Sensoren dienen, wie z.B. Weg-, Geschwindigkeits- oder Beschleunigungssensoren, die z.B. elektrodynamisch oder optisch arbeiten.

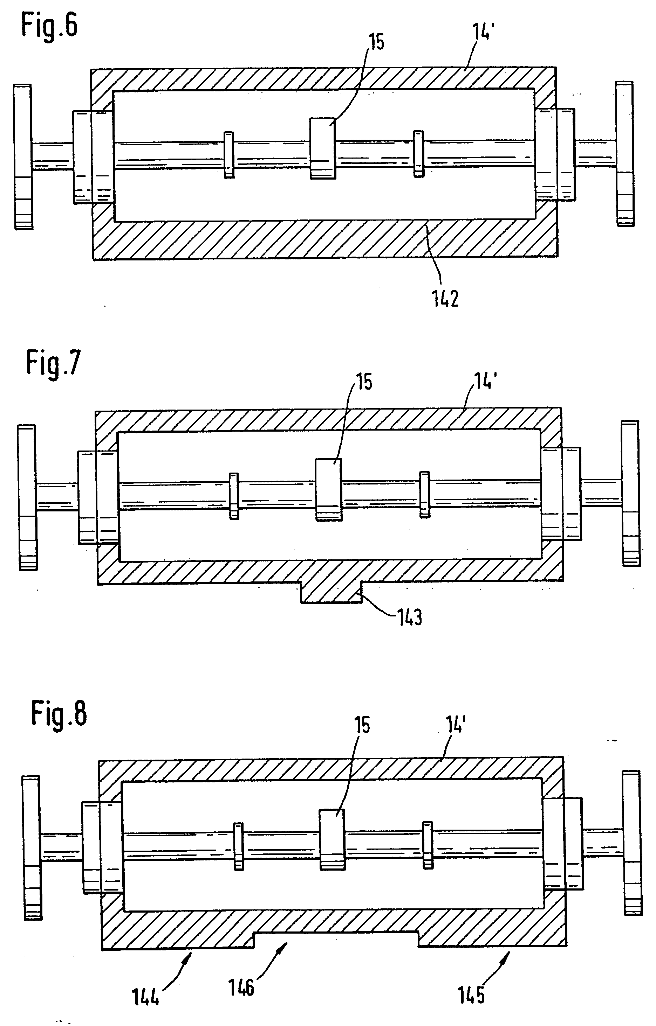

Die Fig. 6 bis 11 zeigen jeweils in einer der Fig. 1 entsprechenden Schnittansicht verschiedene Realisierungen einer zweiten Ausgestaltung der ersten Variante der Erfindung mit einem hinsichtlich seiner lichten Weite wieder kreiszylindrischen Rohr 14', das jedoch - im Gegensatz zur ersten Ausgestaltung nach den Fig. 1 bis 5 - nur eine teilweise einheitliche Wandstärke hat und dessen Längs-Schwerelinie somit nicht mit dessen Längsachse zusammenfällt.

Diese Längsachse des Rohres 14' fällt andererseits mit der Längsachse des Meßrohrs 13 zusammen; beide Rohre sind also in den Fig. 6 bis 11 koaxial, obwohl das Rohr 14' keine einheitliche Wandstärke hat. Dieses Zusammenfallen ist jedoch nicht zwingend: Die beiden Längsachsen können auch parallel zueinander verlaufen.

Die erfindungswesentlich zwingende Parallelität von Längsachse des Meßrohrs 13 und Längs-Schwerelinie des Trägers, insb. des Rohres 14', ergibt sich bei den Realisierungen der Fig. 6 bis 11 durch die nicht-einheitliche Wandstärke des Rohres 14'. Dadurch wird nämlich erreicht, daß dessen Rohrwand zur Auslegermasse 15 eine Gegenmasse bildet, mittels der die von der Auslegermasse erzeugte Unwucht kompensiert wird.

Bei der ersten Realisierung der Gegenmasse nach Fig. 6 ist die Wand des Rohres 14' längs einer der Auslegermasse 15 diametral gegenüberliegenden ersten Mantellinie über die gesamte Länge dicker als die ansonsten einheitliche Wandstärke. Dies kann z.B. durch Fixieren einer Längsrippe 142, insb. Aufschweißen oder Auflöten, entlang der ersten Mantellinie erreicht werden. Breite und Höhe der Längsrippe sowie deren Material sind unter Berücksichtigung der Masse der Auslegermasse 15 und der einheitlichen Wandstärke des Rohres 14' zu wählen.

Bei der zweiten Realisierung der Gegenmasse nach Fig. 7 ist die Wand des Rohres 14' längs der der Auslegermasse 15 diametral gegenüberliegenden ersten Mantellinie nur in einem Bereich gegenüber der Auslegermasse 15 durch ein dort fixiertes Gegengewicht 143 verdickt.

Das Gegengewicht 143 kann wieder z.B. durch Aufschweißen oder Auflöten auf dem Rohr 14' fixiert werden, oder es kann in eine in dessen Wand angebrachte Bohrung oder ein entsprechendes Sackloch eingesetzt und darin fixiert werden. Breite, Höhe und Länge des Gegengewichts 143 sowie dessen Material sind unter Berücksichtigung der Masse der Auslegermasse 15 und der einheitlichen Wandstärke des Rohres 14' zu wählen.

Bei der dritten Realisierung der Gegenmasse nach Fig. 8 ist die Wand des Rohres 14' längs der der Auslegermasse 15 diametral gegenüberliegenden ersten Mantellinie nur über zwei Teilbereiche 144, 145 der gesamten Länge dicker als die ansonsten einheitliche Wandstärke des Rohres 14'. Die Teilbereiche 144, 145 erstrecken sich jeweils vom jeweiligen Ende des Rohres 14' her zu dessen Mitte hin und bilden somit einen Zentralbereich 146, der die einheitliche Wandstärke des Rohres 14' hat.

Die Teilbereiche 144, 145 können wieder z.B. durch Aufschweißen oder Auflöten einer entsprechenden Rippe auf dem Rohr 14' fixiert werden. Breite, Höhe und Länge des jeweiligen Teilbereichs 144, 145 sowie dessen Material sind unter Berücksichtigung der Masse der Auslegermasse 15 und der einheitlichen Wandstärke des Rohres 14' zu wählen.

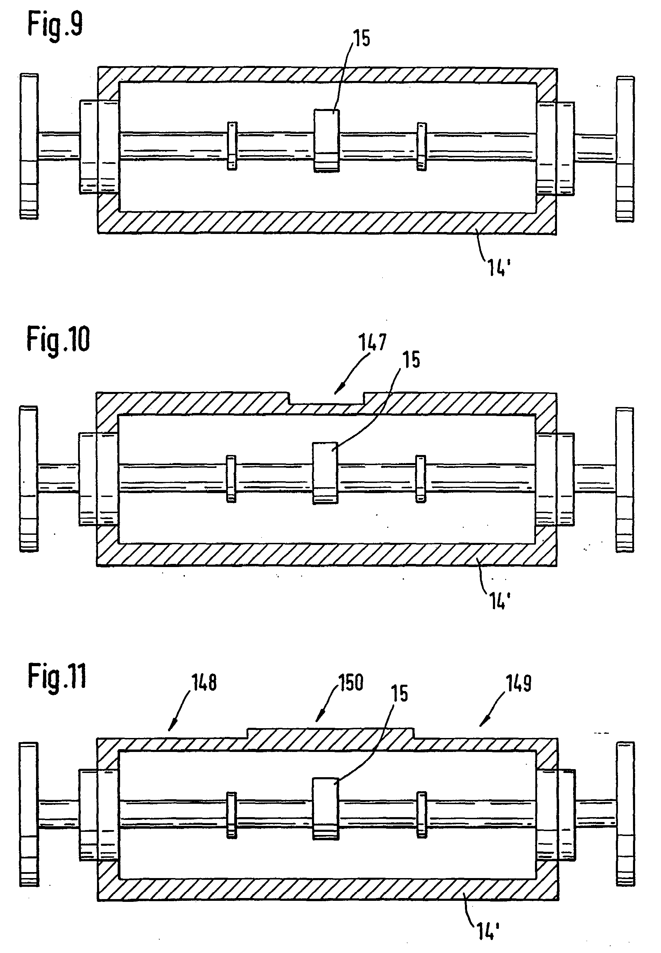

Bei der vierten Realisierung der Gegenmasse nach Fig. 9 ist die Wand des Rohres 14' längs einer der Auslegermasse 15 benachbarten zweiten Mantellinie über die gesamte Länge der Wand dünner als die ansonsten einheitliche Wandstärke gemacht.

Bei der fünften Realisierung der Gegenmasse nach Fig. 10 ist die Wand des Rohres 14' längs der der Auslegermasse 15 benachbarten zweiten Mantellinie nur in einem Zentralbereich 147 gegenüber der Auslegermasse 15 durch Abtragen dünner gemacht; ansonsten aber hat das Rohr 14' die einheitliche Wandstärke.

Bei der sechsten Realisierung der Gegenmasse nach Fig. 11 ist die Wand des Rohres 14' längs der der Auslegermasse 15 benachbarten zweiten Mantellinie nur über zwei Teilbereiche 148, 149 der gesamten Länge dünner als die ansonsten einheitliche Wandstärke des Rohres 14' gemacht. Die Teilbereiche 148, 149 erstrecken sich jeweils vom jeweiligen Ende des Rohres 14' her zu dessen Mitte hin und bilden somit einen Zentralbereich 150, der die einheitliche Wandstärke des Rohres 14' hat.

Bei den Massedurchfluß/Dichte-Aufnehmern der Fig. 9 bis 11 wird die Verminderung der Wandstärke des Rohres 14' durch Abtragen, z.B. Abhobeln oder Abfräsen, von dessen Wand entlang der zweiten Mantellinie erreicht. Die Masse des jeweils abzutragenden Materials ist unter Berücksichtigung der Masse der Auslegermasse 15 und der einheitlichen Wandstärke des Rohres 14' zu bestimmen.

Als Einleitung zur Erläuterung der Fig. 12 und 13 sei zunächst daran erinnert, daß ein an zwei Einspannstellen fixiertes und dazwischen zu Biegeschwingungen angeregtes Rohr ohne Auslegermasse einen einzigen Biegeschwingungs-Grundmode hat. In diesem schwingt das Rohr wie eine Saite mit seiner Grund-Resonanzfrequenz, die in der Theorie der Schwingungen auch als Grundton oder erste Harmonische bezeichnet wird und die zahlenmäßig die niedrigst mögliche ist. Im eingeschwungenen Zustand hat die Saite und somit auch das Rohr zwischen den beiden Einspannstellen einen einzigen Schwingungsbauch und daher dazwischen auch keinen Schwingungsknoten; diese befinden sich vielmehr lediglich an den Einspannstellen.

Im Gegensatz zu diesem Rohr ohne Auslegermasse hat das mit der Auslegermasse 15 versehene Meßrohr 13 entsprechend der Erfindung einen ersten und einen zweiten Biegeschwingungs-Grundmode, wie dies anhand der Fig. 12 und 13 nun erläutert wird. Darin sind jeweils Zentral-Querschnitte des Schwingers aus Meßrohr 13 und Auslegermasse 15 schematisch dargestellt, wobei jeweils in der Mitte der jeweiligen Figur die Ruhestellung des Schwingers und jeweils links bzw. rechts, vgl. den die Schwingungsrichtung angebenden Doppelpfeil, die Stellung des Schwingers bei maximaler Auslenkung gezeigt ist.

Die Fig. 12 zeigt die Verhältnisse für den ersten Biegeschwingungs-Grundmode, in dem sich die Auslegermasse 15 um die Achse des Meßrohrs 13 nach links außen bewegt, wenn sich das Meßrohr nach links bewegt, bzw. nach rechts außen bewegt, wenn sich das Meßrohr nach rechts bewegt. Dabei dreht sich die Auslegermasse jeweils leicht nach außen mit, so daß das Meßrohr eine reine Biegeschwingung ausführt.

Dieser erste Biegeschwingungs-Grundmode hat eine der oben erwähnten Resonanzfrequenz entsprechende - "erste" - Resonanzfrequenz, die zahlenmäßig die niedrigst mögliche ist; für ein bestimmtes Meßrohr mit vorgegebenem Durchmesser, vorgegebener Länge und Wandstärke sowie mit vorgegebener Auslegermasse und deren Bemessung beträgt sie z.B. 400 Hz.

Die Fig. 13 zeigt die Verhältnisse für den erwähnten zweiten Biegeschwingungs-Grundmode, in dem sich die Auslegermasse 15 um die Achse des Meßrohrs 13 nach rechts innen bewegt, wenn sich das Meßrohr nach links bewegt, bzw. nach links innen bewegt, wenn sich das Meßrohr nach rechts bewegt. Dabei dreht sich die Auslegermasse jeweils deutlich nach innen. Somit ist der Biegeschwingung, die das Meßrohr wie im ersten Biegeschwingungs-Grundmode ausführt, eine Drehschwingung überlagert.

Die Drehschwingungsachse dieser Drehschwingung ist offensichtlich nicht gleich der Achse des Meßrohrs, sondern ist parallel zu ihr. Die Drehschwingungsachse ist gleich der Schwerelinie aller mechanischen Massen, die an den Schwingungen im zweiten Biegeschwingungs-Grundmode beteiligt sind. Dies sind die Masse des Meßrohrs incl. der Masse des Fluids, die Masse der Auslegermasse und die Masse der an dieser fixierten und mitschwingenden Teile der Erregeranordnung sowie gegebenenfalls die ersten Teile der unten noch zu erläutertenden Bremsanordnung.

In Fig. 13 ist ein möglicher Durchstoßpunkt der Drehschwingungsachse durch die Zeichenebene mit X bezeichnet; er liegt, wie gezeichnet, auf der senkrechten Mittellinie der Auslegermasse, wenn die Masse der Erregeranordnung symmetrisch zu dieser Mittellinie angeordnet wird. Der Durchstoßpunkt X wandert in Abhängigkeit von der Dichte des Fluids geringfügig hin und her.

Der zweite Biegeschwingungs-Grundmode hat eine - "zweite" - Resonanzfrequenz, die größer als die oben definierte - "erste" - Resonanzfrequenz des ersten Biegeschwingungs-Grundmodes ist; für das erwähnte vorgegebene Meßrohr beträgt sie 900 Hz.

Nach der Erfindung wird das Meßrohr 13 immer zu Schwingungen des zweiten Biegeschwingungs-Grundmodes angeregt, in dem sich die Auslegermasse 15 zum Meßrohr hin bewegt, wenn sich dieses nach außen bewegt, wie dies in Fig. 13 dargestellt ist und oben erläutert wurde.

Da die Resonanzfrequenz des zweiten Biegeschwingungs-Grundmodes circa doppelt so groß wie die Resonanzfrequenz des ersten Biegeschwingungs-Grundmodes ist bzw. gemacht werden kann, läßt sich eine zur Speisung der Erregeranordnung 16 selbstverständlich erforderliche Erregerschaltung in Form einer Phase-Locked Loop, vgl. z.B. die US-A 48 01 897, ohne weiteres so dimensionieren, daß sie nur den zweiten Biegeschwingungs-Grundmode anregt.

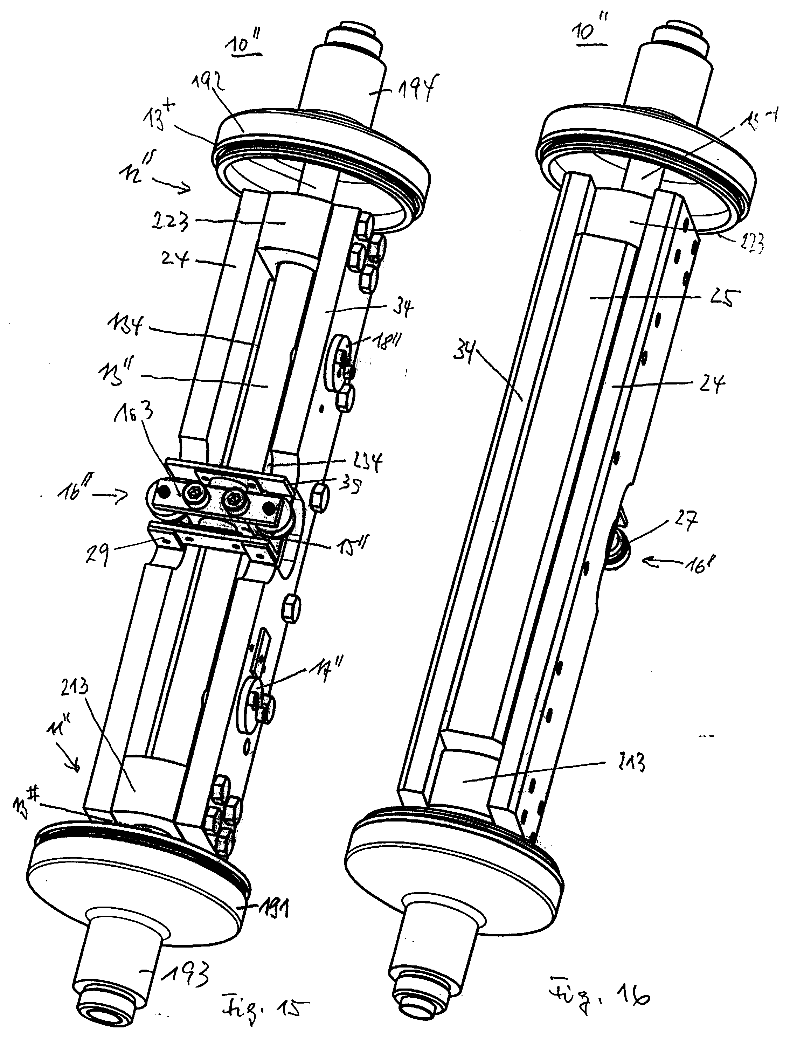

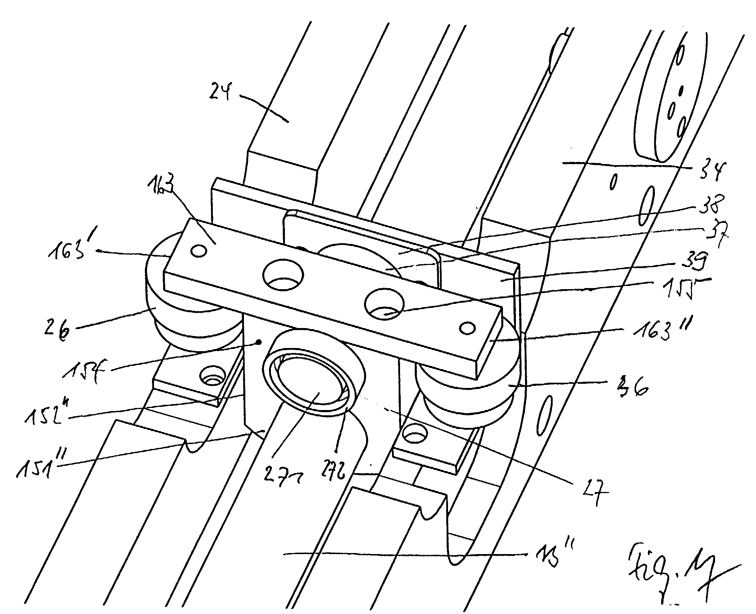

In Fig. 14 ist in der gleichen Weise wie in Fig. 2 eine Weiterbildung der ersten Variante der Erfindung gezeigt, die bei allen bisher erläuterten Ausführungsbeispielen und auch denen der Fig. 15 und 16 angewendet werden kann. Bisherigen Bezugszeichen entsprechende Bezugszeichen von Fig. 14 haben dieselbe Nummer, sind jedoch mit einem Apostroph versehen.

Beim Massedurchfluß/Dichte-Aufnehmer 10' von Fig. 14 ist das zu den Schwingungen angeregte Meßrohr 13' über das Einlaß- und das Auslaßende hinaus mittels eines jeweils gleichlangen, geraden und mit dem Meßrohr 13' fluchtenden Rohrstücks 13", 13* verlängert. Das jeweilige freie Ende der Rohrstücke 13", 13* ist in einem Gehäuse 19 fixiert. Das Gehäuse 19 umfaßt z.B. den Flanschen 111, 121 der Fig. 1 entsprechende Flansche 111', 121'.

In der perspektivischen Draufsicht der Fig. 15 und in der perspektivischen Untersicht der Fig. 16 ist eine zweite Variante eines Coriolis-Massedurchfluß/Dichte-Aufnehmers 10" entsprechend der Erfindung dargestellt. Er hat ein einziges gerades, ein Einlaßende 11" und ein Auslaßende 12" aufweisendes Meßrohr 13". Am Einlaßende ist eine das Meßrohr 13" vollständig umgebende Einlaßplatte 213 und am Auslaßende eine das Meßrohr 13" ebenfalls umgebende Auslaßplatte 223 fixiert.

An der Einlaßplatte 213 und an der Auslaßplatte 223 ist eine erste Trägerplatte 24 fixiert, die parallel zu einer ersten Mantellinie 134 des Meßrohrs 13" verläuft. An der Einlaßplatte und an der Auslaßplatte ist ferner eine zweite Trägerplatte 34 fixiert, die parallel zu einer der ersten Mantellinie 134 diametral gegenüberliegenden zweiten Mantellinie 234 des Meßrohrs verläuft. Somit sind einander zugewandte Seitenflächen der beiden Trägerplatten 24, 34 ebenfalls parallel zueinander.

Etwa in der Mitte zwischen dem Einlaß- und dem Auslaßende 11", 12" ist am Meßrohr 13" auch bei der zweiten Variante eine Auslegermasse 15" fixiert, die im Betrieb wieder bedingt, daß das Meßrohr 13" entweder in einem ersten Biegeschwingungs-Grundmode oder in einem zum ersten Biegeschwingungs-Grundmode höherfrequenten zweiten Biegeschwingungs-Grundmode schwingt.

Als Gegenmasse dient bei der zweiten Variante ein der Auslegermasse 15" gegenüberliegender Längsstab 25, der an der ersten und der zweiten Trägerplatte 24, 34 fixiert ist. Der Längstab 25 erstreckt sich in den Fig. 15 und 16 praktisch parallel zur gesamten schwingfähigen Länge des Meßrohrs 13"; dies ist jedoch nicht zwingend, sondern nur in diesem Ausführungsbeispiel so.

Das System aus den beiden Trägerplatten 24, 34, der Einlaßplatte 213, der Auslaßplatte 223 und dem Längstab 25 hat eine Längs-Schwerelinie, die parallel zur Achse des Meßrohrs 13" verläuft. Hinsichtlich dieser Eigenschaft ist die Anordnung der Fig. 15 und 16 also mit der Anordnung der Fig. 1 bis 5 vergleichbar.

Das Meßrohr 13" wird von einer Erregeranordnung 16" immer in Schwingungen des zweiten Biegeschwingungs-Grundmodes versetzt, die auf die Auslegermasse 15" einwirkt und somit wieder etwa in der Mitte zwischen Einlaß- und Auslaßende angeordnet ist. Besondere Einzelheiten der Erregeranordnung werden noch in Zusammenhang mit Fig. 17 erläutert.

Die einlaß- bzw. die auslaßseitigen Bewegungen des Meßrohrs 13" werden mit jeweils einem Sensor 17" bzw. 18" abgetastet, der jeweils im gleichen Abstand zwischen der Mitte des Meßrohrs und dem Einlaß- bzw. dem Auslaßende angeordnet ist.

In den Fig. 15 und 16 ist durch die Köpfe der gezeichneten Schrauben angedeutet, daß das erwähnte Fixieren der Trägerplatten 24, 34 an den Endplatten 213, 223 und am Längsstab 25 durch Verschrauben erfolgen kann. Dies ist jedoch nicht zwingend; es können auch andere geeignete und dem Fachmann geläufige Befestigungsarten angewendet werden.

Die in den Fig. 15 und 16 dargestellte zweite Variante ist vom Aufbau ihres mechanischen Schwingsystem her mit der Weiterbildung der ersten Variante von Fig. 14 vergleichbar. Auch bei der zweiten Variante ist das Meßrohr 13" über das Einlaß- und das Auslaßende hinaus mittels eines jeweils gleichlangen, geraden und mit dem Meßrohr 13" fluchtenden Rohrstücks 13^{#}, 13⁺ verlängert.

Das jeweilige freie Ende der Rohrstücke 13^{#}, 13⁺ ist in einem Gehäuse fixiert, von dem lediglich Gehäusekappen 191, 192 gezeichnet sind, während ein restlicher, rohrartiger, die Gehäusekappen 191, 192 miteinander verbindender und hermetisch abdichtender Teil nicht zu sehen ist, damit die dargestellten Innenteile nicht verdeckt sind.

Schließlich ist in den Fig. 15 und 16 noch zu sehen, daß die Gehäusekappen 191, 192 in ein Verbindungsstück 193, 194 übergehen, mit denen der Coriolis-Massedurchfluß/Dichte-Aufnehmer 10" in die eingangs erwähnte Rohrleitung fluiddicht eingesetzt werden kann.

Fig. 17 zeigt in perspektivischer Draufsicht und in gegenüber Fig. 15 vergrößertem Maßstab die Auslegermasse 15" und die Erregeranordnung 16" sowie weitere, dieser bevorzugt zugeordnete Teile. Zunächst ist jedoch in bevorzugter Ausgestaltung der zweiten Variante der Erfindung die Auslegermasse 15" als Scheibe ausgebildet. Sie hat eine Vorderfläche 154 und eine dazu parallele, in den Fig. 15 und 17 allerdings verdeckte Hinterfläche. Die Auslegermasse 15" hat ferner eine Bohrung, mittels der die Scheibe über das Meßrohr 13" geschoben und darauf fixiert ist.

Die Scheibe besteht - ähnlich wie bei der Anordnung der Fig. 1 bis 4 - aus einem mit der Bohrung koaxialen Kreissegment 151" mit einem daran angeformten Rechteckteil 152". Von einem Durchmesser des Meßrohrs 13" wird eine Seitenfläche 155 des Rechteckteils 152 " zentral geschnitten; diese Seitenfläche ist in Fig. 17 nur zu einem kleinen Teil, nämlich in Bohrungen eines Balkens 163, zu sehen.

Der Balken 163 ist mit einer wieder verdeckten Befestigungsfläche an der Seitenfläche 155 fixiert; dazu benutzte Schrauben sind in Fig. 15 zu sehen. Der Balken 163 ist länger als die Seitenfläche 155 und hat ein sie überstehendes erstes Balkenende 163' mit einer Fortsetzung der Befestigungsfläche sowie ein sie überstehendes zweites Balkenende 163" mit einer Fortsetzung der Befestigungsfläche.

Die Erregeranordnung 16" besteht aus einem an der Fortsetzung der Befestigungsfläche des ersten Balkenendes 163' fixierten ersten Erregersystem 26 und aus einem an der Fortsetzung der Befestigungsfläche des zweiten Balkenendes 163" fixierten zweiten Erregersystem 36. Das erste bzw. das zweite Erregersystem 26 bzw. 36 enthält eine an der Trägerplatte 24 bzw. 34 fixierte erste bzw. zweite Spule. Diese werden im Betrieb von einem Erregerstrom gegensinnig durchflossen. Die Spulen wirken mit einem ersten bzw. einem zweiten Dauermagneten zusammen, der am Balkenende 163' bzw. 163" fixiert ist.

In bevorzugter Weiterbildung ist zur Unterdrückung von anderen Schwingungsmoden als dem zweiten Biegeschwingungs-Grundmode, insb. zur Unterdrückung des ersten Biegeschwingungs-Grundmodes und dessen Oberschwingungen, ein erster und eine zweiter Teil 27, 37 einer auf dem Wirbelstromprinzip beruhenden Bremsanordnung vorgesehen.

Der erste Teil 27 ist an der Vorderfläche 154 der Scheibe fixiert, und zwar in einem Bereich, wo die oben erläuterte Drehschwingungsachse des mechanischen Drehschwingungssystems einen im Betrieb möglichen Durchstoßpunkt durch die Vorderfläche 154 aufweist.

In vergleichbarer Weise ist auch an der Hinterfläche der Scheibe der erste Teil 37 der zweiten Bremsanordnung fixiert, und zwar wieder in einem Bereich, wo die erwähnte Drehschwingungsachse einen im Betrieb möglichen Durchstoßpunkt durch die Hinterfläche der Scheibe aufweist.

Ein zweiter Teil der ersten Bremsanordnung, der in Fig. 15 kaum zu erkennen ist und daher nicht mit einem Bezugszeichen versehen ist - es müßte das Bezugszeichen 28 sein -, ist an einer an der ersten und der zweiten Trägerplatte 24, 34 fixierten ersten Halterung 29 befestigt; diese ist nur in Fig. 15 dargestellt, in Fig. 17 jedoch zur besseren Sicht auf die Auslegermasse 15" etc. weggelassen.

In vergleichbarer Weise ist ein zweiter Teil 38 der zweiten Bremsanordnung an einer an der ersten und der zweiten Trägerplatte 24, 34 fixierten zweiten Halterung 39 befestigt. Die Fixierung an der Trägerplatte 24 bzw. 34 erfolgt, wie zu sehen ist, mittels abgewinkelter "Füße". Die beiden Halterungen bestehen bevorzugt aus weichmagnetischem Material.

Die beiden ersten Teile 27, 37 der Bremsanordnungen enthalten kreiszylindrische Dauermagnete, von denen in Fig. 17 nur der Dauermagnet 271 zusammen mit einer zugehörigen Halterung 272 zu sehen ist. Die beiden zweiten Teile der Bremsanordnungen sind Kupferscheiben.

Mittels der Bremsanordnungen wird somit die momentane Lage der oben erwähnten Drehschwingungsachse stabilisiert. Es wird somit verhindert, daß sich ein anderer Schwingungsmode, insb. der erste Biegeschwingungs-Grundmode und dessen Oberschwingungen und/oder solche Oberschwingungen des zweiten Biegeschwingungs-Grundmode, die eine andere Drehschwingungsachse als der letztere haben, anfachen und aufschauckeln kann bzw. können.

Dies wäre nämlich gleichbedeutend mit einem beträchtlichen Hin- und Herwandern der Drehschwingungsachse, vgl. z.B. die Fig. 12. Diese Stabilisierung erfolgt solange, wie sich die Drehschwingungsachse im Bereich des zweiten Teils 28 bzw. 38 der Bremsanordnungen befindet.

Eine weitere Erhöhung der Meßgenauigkeit ist bei beiden Varianten der Erfindung möglich, wenn zusätzlich zum zweiten auch der erste Biegeschwingungs-Grundmode erregt wird; die Bremsanordnungen nach den Fig. 15 und 17 sind dann natürlich wegzulassen.

Die Erregung des ersten Biegeschwingungs-Grundmode ist durch eine weitere Phase-Locked Loop erreichbar, die auf der ersten Resonanzfrequenz arbeitet. Die von den Sensoren erzeugten Signale enthalten in diesem Fall sowohl einen Corioliseffekt-bedingten Phasenverschiebungs-Anteil der Schwingungen der zweiten Resonanzfrequenz als auch einen Corioliseffekt-bedingten Phasenverschiebungs-Anteil der Schwingungen der ersten Resonanzfrequenz. Da diese beiden Resonanzfrequenzen sich um etwa einen Faktor 2 unterscheiden, lassen sich die beiden Phasenverschiebungs-Anteile ohne weiteres elektronisch trennen.

## Patentansprüche

1. Coriolis-Massedurchfluß/Dichte-Aufnehmer (10), der in eine Rohrleitung einfügbar ist und im Betrieb von einem zu messenden Fluid durchströmt wird,
- mit einem einzigen geraden, eine Längsachse (131), ein Einlaßende und ein Auslaßende (11, 12) aufweisenden Meßrohr (13),
- mit einem am Einlaßende und am Auslaßende fixierten Träger,
-- von dem eine Längs-Schwerelinie (141) parallel zur Längsachse (131) des Meßrohrs verläuft, jedoch nicht mit dieser zusammenfällt,
- mit einer Auslegermasse (15),
-- die in der Mitte zwischen dem Einlaß- und dem Auslaßende (11, 12) am Meßrohr (13) fixiert ist und
-- die im Betrieb bedingt, daß das Meßrohr entweder in einem ersten Biegeschwingungs-Grundmode oder in einem zum ersten Biegeschwingungs-Grundmode höherfrequenten zweiten Biegeschwingungs-Grundmode schwingt,
- mit einer das Meßrohr (13) immer in Schwingungen des zweiten Biegeschwingungs-Grundmode versetzenden Erregeranordnung (16),
-- die etwa in der Mitte zwischen Einlaß- und Auslaßende angeordnet ist, und
- mit jeweils einem Sensor (17, 18) für die einlaß- bzw. die auslaßseitigen Bewegungen des Meßrohrs, der jeweils im gleichen Abstand zwischen dessen Mitte und dem Einlaß- bzw. dem Auslaßende angeordnet ist.

2. Coriolis-Massedurchfluß/Dichte-Aufnehmer nach Anspruch 1, bei dem der Träger ein zylindrisches Rohr (14) mit einer Rohrwand von vollständig einheitlicher Wandstärke und mit einer Längsachse ist, die parallel zur Längsachse (131) des Meßrohrs verläuft, jedoch nicht mit dieser zusammenfällt.

3. Coriolis-Massedurchfluß/Dichte-Aufnehmer nach Anspruch 1, bei dem der Träger ein zylindrisches Rohr (14') mit einer Rohrwand von nur teilweise einheitlicher Wandstärke ist und das Rohr eine Längsachse hat, die parallel zur Längsachse (131) des Meßrohrs verläuft oder mit dieser zusammenfällt, wobei zur Bildung einer Gegenmasse die Rohrwand im Bereich einer der Auslegermasse (15) diametral gegenüberliegenden ersten Mantellinie mindestens teilweise dicker als die einheitliche Wandstärke und/oder im Bereich einer der Auslegermasse benachbarten ersten Mantellinie mindestens teilweise dünner als die einheitliche Wandstärke ist.

4. Coriolis-Massedurchfluß/Dichte-Aufnehmer nach Anspruch 3, bei dem diametral gegenüber der Auslegermasse ein Gegengewicht (143) auf der Rohrwand befestigt oder darin teilweise eingesetzt ist.

5. Coriolis-Massedurchfluß/Dichte-Aufnehmer nach einem der Ansprüche 1 bis 4, bei dem die Auslegermasse (15) als Scheibe mit einer Bohrung ausgebildet ist, mittels der die Scheibe über das Meßrohr (13) geschoben ist.

6. Coriolis-Massedurchfluß/Dichte-Aufnehmer nach Anspruch 5, bei dem die Scheibe aus einem mit der Bohrung koaxialen Halbkreisring (151) mit einem daran angeformten Rechteckteil (152) besteht.

7. Coriolis-Massedurchfluß/Dichte-Aufnehmer nach Anspruch 5 oder 6, bei dem die Scheibe eine Dicke hat, die etwa halb so groß wie der Durchmesser des Meßrohrs (13) ist.

8. Coriolis-Massedurchfluß/Dichte-Aufnehmer nach einem der Ansprüche 1 bis 7 mit einer einlaß- und einer auslaßseitigen ringförmigen Rippe (132, 133) des Meßrohrs (13), die am Ort des jeweiligen Sensors (17, 18) angeordnet ist.

9. Coriolis-Massedurchfluß/Dichte-Aufnehmer nach einem der Ansprüche 1 bis 8, bei dem die Erregeranordnung
- aus einer ersten Teilanordnung besteht, die auf das Meßrohr mit einer ersten Erregerkraft in Richtung auf den Schnittpunkt einer Längs-Symmetrielinie der Auslegermasse mit der Längsachse des Meßrohrs einwirkt, und
- aus einer zweiten Teilanordnung besteht, die auf ein meßrohr-abgewandtes Ende der Auslegermasse mit einer der ersten Erregerkraft entgegengerichteten ersten Erregerkraft einwirkt.

10. Coriolis-Massedurchfluß/Dichte-Aufnehmer (10"), der in eine Rohrleitung einfügbar ist und im Betrieb von einem zu messenden Fluid durchströmt wird,
- mit einem einzigen geraden, ein Einlaßende und ein Auslaßende (11", 12") aufweisenden Meßrohr (13"),
- mit einer am Einlaßende fixierten, das Meßrohr umgebenden Einlaßplatte (213),
- mit einer am Auslaßende fixierten, das Meßrohr umgebenden Auslaßplatte (223),
- mit einer an der Einlaßplatte und an der Auslaßplatte fixierten ersten Trägerplatte (24), die parallel zu einer ersten Mantellinie (134) des Meßrohrs verläuft,
- mit einer an der Einlaßplatte und der Auslaßplatte fixierten zweiten Trägerplatte (34), die parallel zu einer der ersten Mantellinie diametral gegenüberliegenden zweiten Mantellinie (234) des Meßrohrs verläuft,
- mit einer Auslegermasse (15"),
-- die in der Mitte zwischen dem Einlaß- und dem Auslaßende (11", 12") am Meßrohr (13") fixiert ist und
-- die im Betrieb bedingt, daß das Meßrohr entweder in einem ersten Biegeschwingungs-Grundmode oder in einem zum ersten Biegeschwingungs-Grundmode höherfrequenten zweiten Biegeschwingungs-Grundmode schwingt,
- mit einem als Gegenmasse dienenden, an der ersten und der zweiten Trägerplatte fixierten, der Auslegermasse (15") gegenüberliegenden Längsstab (25),
- mit einer das Meßrohr (13") immer in Schwingungen des zweiten Biegeschwingungs-Grundmodes versetzenden Erregeranordnung (16"),
-- die etwa in der Mitte zwischen Einlaß- und Auslaßende angeordnet ist, und
- mit jeweils einem Sensor (17", 18") für die einlaß- bzw. die auslaßseitigen Bewegungen des Meßrohrs, der jeweils im gleichen Abstand zwischen dessen Mitte und dem Einlaß- bzw. dem Auslaßende angeordnet ist.

11. Coriolis-Massedurchfluß/Dichte-Aufnehmer nach Anspruch 10, bei dem die Auslegermasse (15") als Scheibe ausgebildet ist, die eine Vorderfläche (154), eine Hinterfläche, eine zur Achse des Meßrohrs parallele Drehschwingungsachse und eine Bohrung aufweist, mittels der die Scheibe über das Meßrohr (13") geschoben ist, welche Scheibe aus einem mit der Bohrung koaxialen Kreissegment (151") mit einem daran angeformten Rechteckteil (152") besteht, von dem eine Seitenfläche (155), die von einem Durchmesser des Meßrohrs zentral geschnitten wird, an einer Befestigungsfläche eines Balkens (163) fixiert ist, der länger als die Seitenfläche ist und ein sie überstehendes erstes Balkenende (163') mit einer Fortsetzung der Befestigungsfläche sowie ein die Seitenfläche überstehendes zweites Balkenende (163") mit einer Fortsetzung der Befestigungsfläche aufweist.

12. Coriolis-Massedurchfluß/Dichte-Aufnehmer nach Anspruch 11, bei dem die Erregeranordnung (16") aus einem an der Fortsetzung der Befestigungsfläche des ersten Balkenendes (163') fixierten ersten Erregersystem (26) und aus einem an der Fortsetzung der Befestigungsfläche des zweiten Balkenendes (163") fixierten zweiten Erregersystem (36) besteht, wobei das erste und das zweite Erregersystem eine erste bzw. eine zweite Spule enthält, die im Betrieb gegensinnig von einem Erregerstrom durchflossen sind.

13. Coriolis-Massedurchfluß/Dichte-Aufnehmer nach Anspruch 11 oder 12, bei dem zur Unterdrückung von anderen Schwingungsmoden als dem zweiten Biegeschwingungs-Grundmode
- an der Vorderfläche (154) der Scheibe in einem Bereich, in dem die Drehschwingungsachse einen im Betrieb möglichen Durchstoßpunkt (X) durch sie aufweist, ein erster Teil (27) einer auf dem Wirbelstromprinzip beruhenden ersten Bremsanordnung fixiert ist,
- an der Hinterfläche der Scheibe in einem Bereich, in dem die Drehschwingungsachse einen im Betrieb möglichen Durchstoßpunkt durch sie aufweist, ein erster Teil (37) einer auf dem Wirbelstromprinzip beruhenden zweiten Bremsanordnung fixiert ist,
- die erste Bremsanordnung einen zweiten Teil enthält, der an einer ersten, mindestens an der ersten Trägerplatte fixierten Halterung (29) befestigt ist, und
- die zweite Bremsanordnung einen zweiten Teil (38) enthält, der an einer zweiten, mindestens an der ersten Trägerplatte fixierten Halterung (39) befestigt ist.

14. Coriolis-Massedurchfluß/Dichte-Aufnehmer nach Anspruch 13, bei dem die ersten Teile (27, 37) der Bremsanordnungen kreiszylindrische Dauermagnete (271) sind und bei dem die zweiten Teile (38) der Bremsanordnungen Kupferscheiben sind.

15. Coriolis-Massedurchfluß/Dichte-Aufnehmer nach einem der Ansprüche 1 bis 14, bei dem das Meßrohr über das Einlaß- und das Auslaßende hinaus mittels eines jeweils gleichlangen Rohrstücks (13", 13*; 13^{#}, 13⁺) verlängert ist, dessen jeweiliges freies Ende in einem Gehäuse (19) fixiert ist.

16. Coriolis-Massedurchfluß/Dichte-Aufnehmer nach einem der Ansprüche 1 bis 15, bei dem zusätzlich zum zweiten auch der erste Biegeschwingungs-Grundmode erregt ist.

## Claims

1. A Coriolis mass flow/density sensor (10) which can be installed in a pipe and through which a fluid to be measured flows during operation, comprising:
- a single straight measuring tube (13) having a longitudinal axis (131), an inlet end and an outlet end (11, 12);
- a support fixed to the inlet end and the outlet end,
-- a longitudinal centroidal (141) line of which is parallel to, but does not coincide with, the longitudinal axis (131) of the measuring tube;
- a cantilever (15)
-- which is fixed to the measuring (13) tube midway between the inlet end and the outlet end (11, 12), and
-- which during operation causes the measuring tube to vibrate either in a first fundamental flexural mode or in a second fundamental flexural mode having a higher frequency than the first fundamental flexural mode;
- an excitation arrangement (16) for constantly exciting the measuring tube in the second fundamental flexural mode
-- which is disposed approximately midway between the inlet end and the outlet end; and
- a sensor (17) for the motions of the measuring tube on an inlet side and a sensor (18) for the motions of the measuring tube on an outlet side which are located between the middle of the measuring tube and the inlet end and outlet end, respectively, at the same distance therefrom.

2. A Coriolis mass flow/density sensor as claimed in claim 1 wherein the support is a cylindrical tube (14) having a wall of uniform thickness and having a longitudinal axis which is parallel to, but does not coincide with, the longitudinal axis (131) of the measuring tube.

3. A Coriolis mass flow/density sensor as claimed in claim 1 wherein the support is a cylindrical tube (14') having a wall of only partially uniform thickness and a longitudinal axis which is parallel to, or coincides with, the longitudinal axis (131) of the measuring tube, with the tube wall in the region of a first generating line diametrically opposite the cantilever (15) being at least partially thicker than the uniform wall thickness and/or the tube wall in the region of a first generating line adjacent to the cantilever being at least partially thinner than the uniform wall thickness in order to forma counterbalance.

4. A Coriolis mass flow/density sensor as claimed in claim 3 wherein a counterweight (143) is fixed to, partially inserted in, or integrally formed on the tube wall dia-metrically opposite the cantilever.

5. A Coriolis mass flow/density sensor as claimed in anyone of claims 1 to 4 wherein the cantilever (15) is implemented as a plate or a disk with a bore by means of which the plate or disk is slipped over the measuring tube (13).

6. A Coriolis mass flow/density sensor as claimed in claim 5 wherein the plate or disk consists of a semicircular ring portion (151), which is coaxial with the bore, and a rectangular portion (152) formed thereon.

7. A Coriolis mass flow/density sensor as claimed in claim 5 or 6 wherein the plate or disk has a thickness equal to approximately half the diameter of the measuring tube (13).

8. A Coriolis mass flow/density sensor as claimed in anyone of claims 1 to 7 wherein the measuring tube (13) has an annular rib (132) on the inlet side and an annular rib (133) on the outlet side which are disposed at the locations of the respective sensors (17, 18).

9. A Coriolis mass flow/density sensor as claimed in anyone of claims 1 to 8 wherein the excitation arrangement consists of
- a first portion which acts on the measuring tube in the direction of the intersection of a longitudinal axis of symmetry of the cantilever and the longitudinal axis of the measuring tube with a first excitation force, and a
- second portion, which acts on an end of the cantilever remote from the measuring tube with a second excitation force directed opposite to the first excitation force.

10. A Coriolis mass flow/density sensor (10") which can be installed in a pipe and through which a fluid to be measured flows during operation, comprising:
- a single straight measuring tube (13") having an inlet end (11") and an outlet end (12");
- an inlet plate (213) fixed at the inlet end and surrounding the measuring tube;
- and outlet plate (223) fixed at the outlet end and surrounding the measuring tube;
- a first support plate (24) fixed to the inlet plate and the outlet plate and extending parallel to a first generating line (134) of the measuring tube;
- a second support plate (34) fixed to the inlet plate and the outlet plate and extending parallel to a second generating line (234) of the measuring tube diametrically opposite the first generating line;
- a cantilever (15")
-- which is fixed to the measuring tube (13") midway between the inlet end (11") and the outlet end (12"), and
-- which during operation causes the measuring tube to vibrate either in a first fundamental flexural mode or in a second fundamental flexural mode having a higher frequency than the first fundamental flexural mode;
- a longitudinal bar (25) located opposite the cantilever (15") and fixed to the first and second support plates, said longi-tudinal bar acting as a counterbalance;
- an excitation arrangement (16")
-- which constantly excites the measuring tube in the second fundamental flexural mode, and
-- which is disposed approximately midway between the inlet end and the outlet end; and
- a sensor (17") for the motions of the measuring tube on an inlet side and a sensor (18") for the motions of the measuring tube on an outlet side which are located between the middle of the measuring tube and the inlet end and outlet end, respectively, at the same distance therefrom.

11. A Coriolis mass flow/density sensor as claimed in claim 10 wherein the cantilever (15") is a plate having a front surface (154), a back surface, an axis of torsional vibration parallel to the axis of the measuring tube, and a bore by means of which the plate (13") is slipped over the measuring tube, said plate consisting of a circular-segment portion (151"), which is coaxial with the bore, and a rectangular portion (152") formed thereon, an end surface (155) of which, which is cut centrally by a diameter of the measuring tube, is fixed to an fastening area of a beam (163) which is longer than the end surface and has a first end (163') and a second (163") end which project beyond the end surface and comprise respective continuations of the fastening area.

12. A Coriolis mass flow/density sensor as claimed in claim 11 wherein the excitation arrangement (16") consists of a first excitation system (26), fixed to the continuation of the fastening area of the first beam end (163'), and a second excitation system (36), fixed to the continuation of the fastening area of the second beam end, with the first and second excitation systems comprising a first coil and a second coil, respectively, which in operation are traversed by an exciting current in opposite directions.

13. A Coriolis mass flow/density sensor as claimed in claim 11 or 12 wherein, in order to suppress modes of vibration other than the second fundamental flexural mode,
- a first part (27) of a first brake assembly based on the eddy-current principle is fixed to the front surface (154) of the plate in an area in which the axis torsional vibration has a possible piercing point (X) through said plate;
- a first part (37) of a second brake assembly based on the eddy-current principle is fixed to the back surface of the plate in an area in which the axis of torsional vibration has a possible piercing point (X) through said plate;
- the first brake assembly comprises a second part which is attached to a first holder (29) fixed at least to the first support plate; and
- the second brake assembly comprises a second portion (38) which is attached to a second holder (39) fixed at least to the first support plate.

14. A Coriolis mass flow/density sensor as claimed in claim 12 or 13 wherein the first parts (17, 37) of the brake assemblies are circular cylindrical permanent magnets (271), and wherein the second parts (38) of the brake assemblies are copper disks.

15. A Coriolis mass flow/density sensor as claimed in anyone of claims 1 to 14 wherein the measuring tube is extended beyond the inlet and outlet ends using respective tube sections (13", 13*, 13^{#}, 13⁺) of equal length whose respective free ends are fixed in a housing (19).

16. A Coriolis mass flow/density sensor as claimed in anyone of claims 1 to 15 wherein in addition to the second fundamental flexural mode, the first fundamental flexural mode is excited.

## Revendications

1. Capteur de débit massique (10) et/ou de densité à effet Coriolis qui peut être monté dans une conduite et qui est traversé, en cours de fonctionnement, par un fluide à mesurer, comprenant :
- un seul tube de mesure droit (13) présentant un axe longitudinal (131), une extrémité d'entrée et une extrémité de sortie (11, 12),
- un support fixé au niveau de l'extrémité d'entrée et de l'extrémité de sortie,
-- à partir duquel s'étend une ligne longitudinale de gravité (141) parallèle à l'axe longitudinal (131) du tube de mesure, ladite ligne de gravité ne coïncidant cependant pas avec cet axe longitudinal,
- une masse en porte-à-faux (15)
-- qui est fixée au milieu du tube de mesure (13) entre l'extrémité d'entrée et l'extrémité de sortie (11, 12) et
-- qui, en cours de fonctionnement, fait que le tube de mesure oscille soit dans un premier mode fondamental de vibrations de flexion, soit dans un second mode fondamental de vibrations de flexion à plus haute fréquence par rapport au premier mode fondamental de vibrations de flexion,
- un dispositif d'excitation (16) déplaçant le tube de mesure (13) toujours dans des vibrations du second mode fondamental de vibrations de flexion,
-- lequel dispositif d'excitation est disposé sensiblement au milieu entre l'extrémité d'entrée et l'extrémité de sortie, et
- à chaque fois, un capteur (17, 18) pour les déplacements côté entrée et côté sortie du tube de mesure, lequel capteur est disposé toujours suivant le même intervalle entre sa partie centrale et l'extrémité d'entrée ou l'extrémité de sortie.

2. Capteur de débit massique et/ou de densité à effet Coriolis selon la revendication 1, dans lequel le support est un tube cylindrique (14) doté d'une paroi tubulaire d'épaisseur de paroi complètement uniforme et d'un axe longitudinal qui s'étend parallèlement à l'axe longitudinal (131) du tube de mesure, mais sans coïncider avec ledit axe longitudinal.

3. Capteur de débit massique et/ou de densité à effet Coriolis selon la revendication 1, dans lequel le support est un tube cylindrique (14') comprenant une paroi tubulaire d'une épaisseur de paroi seulement partiellement uniforme, ledit tube cylindrique comprenant un axe longitudinal qui est parallèle à l'axe longitudinal (131) du tube de mesure ou qui coïncide avec cet axe longitudinal, où, pour former un contrepoids, la paroi tubulaire, dans la zone d'une première ligne latérale diamétralement opposée à la masse en porte-à-faux (15), est au moins partiellement plus épaisse que l'épaisseur de paroi uniforme et/ou, dans la zone d'une première ligne latérale voisine de la masse en porte-à-faux, la paroi tubulaire est au moins partiellement plus mince que l'épaisseur de paroi uniforme.

4. Capteur de débit massique et/ou de densité à effet Coriolis selon la revendication 3, dans lequel un contrepoids (143) est fixé sur la paroi tubulaire diamétralement à l'opposé de la masse en porte-à-faux ou qui est partiellement introduit dans ladite paroi tubulaire.

5. Capteur de débit massique et/ou de densité à effet Coriolis selon l'une quelconque des revendications 1 à 4, dans lequel la masse en porte-à-faux (15) est constituée par un disque comprenant un perçage grâce auquel le disque coulisse sur le tube de mesure (13).

6. Capteur de débit massique et/ou de densité à effet Coriolis selon la revendication 5, dans lequel le disque se compose d'un anneau demi-circulaire (151) coaxial avec le perçage, anneau demi-circulaire sur lequel une pièce rectangulaire (152) est formée.

7. Capteur de débit massique et/ou de densité à effet Coriolis selon la revendication 5 ou 6, dans lequel le disque a une épaisseur qui est à peu près égale à la moitié du diamètre du tube de mesure (13).

8. Capteur de débit massique et/ou de densité à effet Coriolis selon l'une quelconque des revendications 1 à 7, comprenant une nervure (132, 133) de forme annulaire placée côté entrée et côté sortie du tube de mesure (13), laquelle nervure est disposée au niveau du capteur respectif (17, 18).

9. Capteur de débit massique et/ou de densité à effet Coriolis selon l'une quelconque des revendications 1 à 8, dans lequel le dispositif d'excitation se compose
- d'un premier dispositif partiel qui agit sur le tube de mesure avec une première force du système d'excitation en direction du point d'intersection d'une ligne de symétrie longitudinale de la masse en porte-à-faux, avec l'axe longitudinal du tube de mesure, et
- d'un second dispositif partiel qui agit sur une extrémité de la masse en porte-à-faux, placée à l'opposé du tube de mesure, avec une première force du système d'excitation de direction opposée à la première force du système d'excitation.

10. Capteur de débit massique (10") et/ou de densité à effet Coriolis qui peut être monté dans une conduite et qui, en cours de fonctionnement, est traversé par un fluide à mesurer, comprenant :
- un seul tube de mesure droit (13") présentant une extrémité d'entrée et une extrémité de sortie (11", 12"),
- une plaque d'entrée (213) fixée au niveau de l'extrémité d'entrée et qui entoure le tube de mesure,
- une plaque de sortie (223) fixée au niveau de l'extrémité de sortie et qui entoure le tube de mesure,
- une première plaque support (24) fixée sur la plaque d'entrée et sur la plaque de sortie, laquelle plaque support est parallèle à une première ligne latérale (134) du tube de mesure,
- une seconde plaque support (34) fixée sur la plaque d'entrée et sur la plaque de sortie, laquelle plaque support est parallèle à une seconde ligne latérale (234) du tube de mesure, diamétralement opposée à la première ligne latérale,
- une masse en porte-à-faux (15")
-- qui est fixée au milieu du tube de mesure (13") entre l'extrémité d'entrée et l'extrémité de sortie (11", 12") et
-- qui, en cours de fonctionnement, fait que le tube de mesure oscille soit dans un premier mode fondamental de vibrations de flexion, soit dans un second mode fondamental de vibrations de flexion à plus haute fréquence par rapport au premier mode fondamental de vibrations de flexion,
- une barre longitudinale (25) servant de contrepoids, placée à l'opposé de la masse en porte-à-faux (15") et fixée sur les première et seconde plaques supports,
- un dispositif d'excitation (16") déplaçant le tube de mesure (13") toujours dans des vibrations du second mode fondamental de vibrations de flexion,
-- lequel dispositif d'excitation est disposé sensiblement au milieu entre l'extrémité d'entrée et l'extrémité de sortie, et
- à chaque fois, un capteur (17", 18") pour les déplacements côté entrée et côté sortie du tube de mesure, lequel capteur est disposé toujours suivant le même intervalle entre sa partie centrale et l'extrémité d'entrée ou l'extrémité de sortie.

11. Capteur de débit massique et/ou de densité à effet Coriolis selon la revendication 10, dans lequel la masse en porte-à-faux (15") est configurée comme un disque qui comprend une surface avant (154), une surface arrière, un axe de vibrations torsionnelles parallèle à l'axe du tube de mesure et un perçage au moyen duquel le disque coulisse sur le tube de mesure (13"), lequel disque se compose d'un segment circulaire (151") coaxial avec le perçage, segment circulaire sur lequel est formée une pièce rectangulaire (152") dont une surface latérale (155), qui est découpée au milieu par un diamètre de tube de mesure, est fixée sur une surface de fixation d'une poutre (163) qui est plus longue que la surface latérale et qui présente une première extrémité de poutre (163') dépassant de la surface latérale avec un prolongement de la surface de fixation, ainsi qu'une seconde extrémité de poutre (163") dépassant de la surface latérale avec un prolongement de la surface de fixation.

12. Capteur de débit massique et/ou de densité à effet Coriolis selon la revendication 11, dans lequel le système d'excitation (16") se compose d'un premier système d'excitation (26) fixé sur le prolongement de la surface de fixation de la première extrémité de poutre (163') et d'un second système d'excitation (36) fixé sur le prolongement de la surface de fixation de la seconde extrémité de poutre (163"), où les premier et second systèmes d'excitation contiennent une première bobine et une seconde bobine qui, en cours de fonctionnement, sont traversées par un courant d'excitation passant en sens inverse.

13. Capteur de débit massique et/ou de densité à effet Coriolis selon la revendication 11 ou 12, dans lequel, pour empêcher des modes de vibrations de flexion autres que le second mode fondamental de vibrations de flexion,
- il est prévu une première pièce (27) d'un premier dispositif de freinage fonctionnant suivant le principe des courants de Foucault, fixée sur la surface avant (154) du disque, dans une zone où l'axe des vibrations torsionnelles présente, en cours de fonctionnement, un point de percée possible (X) à travers l'axe,
- il est prévu une première pièce (37) d'un second dispositif de freinage fonctionnant suivant le principe des courants de Foucault, fixée sur la surface arrière du disque, dans une zone où l'axe des vibrations torsionnelles présente, en cours de fonctionnement, un point de percée possible à travers l'axe,
- le premier dispositif de freinage comprend une seconde pièce qui est fixée sur une première fixation (29) fixée au moins sur la première plaque support, et
- le second dispositif de freinage comprend une seconde pièce (38) qui est fixée sur une seconde fixation (39) fixée au moins sur la première plaque support.

14. Capteur de débit massique et/ou de densité à effet Coriolis selon la revendication 13, dans lequel les premières pièces (27, 37) des dispositifs de freinage sont des aimants permanents (271) cylindriques circulaires, et dans lequel les secondes pièces (38) des dispositifs de freinage sont des disques en cuivre.

15. Capteur de débit massique et/ou de densité à effet Coriolis selon l'une quelconque des revendications 1 à 14, dans lequel le tube de mesure est prolongé au-delà de l'extrémité d'entrée et de l'extrémité de sortie au moyen d'une pièce tubulaire de même longueur (13", 13* ; 13^{#}, 13⁺), dont l'extrémité libre respective est fixée dans un boîtier (19).

16. Capteur de débit massique et/ou de densité à effet Coriolis selon l'une quelconque des revendications 1 à 15, dans lequel le premier mode fondamental de vibrations de flexion est excité aussi en plus du second mode.
